# EUROPEAN PATENT APPLICATION

(11) **EP 2 408 178 A1**
(43) Date of publication of application: **18.01.2012**
(21) Application number: 10169850.4
(22) Date of filing: 16.07.2010
(51) Int. Cl.: H04M 1/27, H04M 1/60

(54) **Speaker phone mode operation of a mobile device**

(71) Applicant: Research In Motion Limited, Waterloo, ON N2L 3W8 (CA)
(72) Inventor: Spencer, Bradford Lawrence, Bedford Nova Scotia B4B 0G4 (CA)
(74) Representative: Phillips, Emily Elizabeth

(57) **Abstract**

A mobile device configured for hands-free operation includes a detection mechanism configured to detect an orientation of the mobile device; a microphone; a speaker that generates audio sound when the mobile device is in a speaker phone mode; and a processor module coupled to the detection mechanism and the speaker. The processor module is adapted to initiate a voice call using a voice dialing mode, where the mobile device dials a telephone number based on commands received through the microphone; determine an active voice call status when the voice call is active; detect a current orientation of the mobile device received from the detection mechanism; determine whether the detected current orientation is within a predetermined threshold that is indicative of a speaker phone mode operating orientation; and switch the mobile device to a speaker phone mode, when the detected current orientation indicates the speaker phone mode operating orientation.

## Description

### FIELD OF TECHNOLOGY

The subject matter herein generally relates to operation of a mobile device and in particular, operation of a mobile device in a speaker phone mode.

### BACKGROUND

Mobile devices are designed to provide a variety of functions. For example, these functions can include telephonic communication, audio playback, video playback, gaming, and messaging, among others. Mobile devices can include cellular telephones, smartphones, portable gaming systems, portable audio and video players, tablets, messaging devices, personal digital assistants, and mobile computers. Mobile devices can include a hands-free operating mode whereby the mobile device can transmit audio without having an operator holding the device proximate to the operator's face. In some mobile devices, the use of an audio headset is implemented to allow for hands-free operation. In other mobile devices, the mobile device may use a specially configured hands-free device.

### BRIEF DESCRIPTION OF THE DRAWINGS

Implementations of the present application will now be described, by way of example only, with reference to the attached Figures, wherein:

FIG 1 illustrates an example of a mobile device;

FIG 2 illustrates an example of a block diagram of several exemplary components that can be part of the mobile device of FIG. 1; and

FIG. 3 illustrates a method for speaker phone mode operation of a mobile device according to the present disclosure.

### DETAILED DESCRIPTION

As will be appreciated for simplicity and clarity of illustration, where appropriate, reference numerals have been repeated among the different figures to indicate corresponding or analogous elements. In addition, numerous specific details are set forth in order to provide a thorough understanding of the implementations described herein. However, as will be understood by those of ordinary skill in the art, the implementations described herein can be practiced without these specific details. In other instances, methods, procedures and components have not been described in detail so as not to obscure the related relevant feature being described. Also, the description is not to be considered as limiting the scope of the implementations described herein.

Several definitions that apply throughout this document will now be presented. The word "coupled" is defined as connected, whether directly or indirectly through intervening components and is not necessarily limited to physical connections. The term "mobile device" is defined as any electronic device that is capable of at least accepting information entries or commands from a user and includes the mobile device's own power source. The term "speaker phone mode" is defined as a hand-free operation mode of a mobile device in which an operator of the mobile device does not need to hold the mobile phone or wear a headset during a call. Further definitions will be presented below.

In existing mobile phones, an operator is required to physically interact with a mobile phone (such as button presses or menu selections) in order to switch the phone to a speaker phone mode. Therefore, the present disclosure contemplates a mobile device to be able to switch to the speaker phone mode without an operator of the mobile device having to physically interact with the mobile device during a voice call. A method and system for speaker phone mode operation of a mobile device that does not require additional interaction during the phone call is presented herein.

The present disclosure generally presents a mobile device that is configured for hands-free operation and specifically for speaker phone operation. The mobile device includes a detection mechanism configured to detect the orientation of the device. The orientation of the device can indicate the device's relative proximity or orientation with respect to gravitational force. Examples of detection mechanisms will be presented more fully herein. The mobile device includes a processor module, which in at least one implementation includes a microprocessor. The processor module is adapted to execute instructions which can be stored on a computer readable medium. The processor module can be coupled to the detection mechanism and a speaker of the mobile device. The processor module is adapted to initiate a voice call using a voice dialing mode that allows the mobile device to dial a telephone number based on voice commands. The processor module also determines whether the detected current orientation of the mobile device is within a predetermined threshold that is indicative of a speaker phone mode operating orientation. Examples of the predetermined threshold will be described below. While in one implementation, the comparison is in relation to a predetermined threshold, other implementations include other types of determinations. The processor module is also adapted to switch the mobile device to a speaker phone mode when the detected current orientation indicates the speaker phone mode operating orientation.

The mobile device as described herein allows for the speaker phone mode operation of the device to be hands-free. In one implementation, the operator is only required to make a single touch of the device to enter voice dialing mode. The mobile device then determines whether the voice call should be continued in either a speaker phone mode or in a regular phone mode.

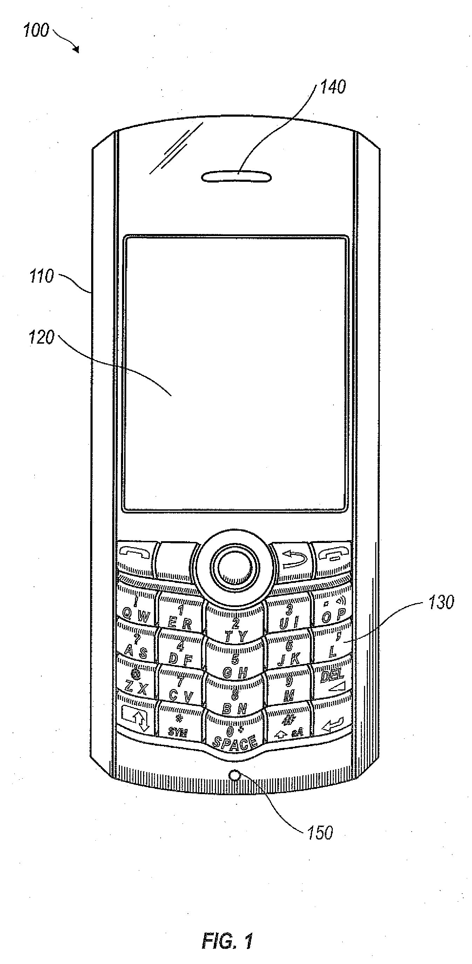

Referring to FIG. 1, an example of a mobile device 100 is shown. In one arrangement, the mobile device 100 can include a housing 110, a display 120, and a keypad 130. The keypad 130 can include a keyfield having alphanumeric keys arranged in a keyboard layout, numeric keys, and other function keys. While in the illustrated implementation the mobile device 100 is a handhold wireless communication device, the mobile device 100 can be any of the following: a personal digital assistant (PDA), a handheld electronic device, a non-handheld wireless communication device, a pager, a cellular phone, a cellular smart-phone, a wireless organizer, a wirelessly enabled notebook computer and the like. The present disclosure contemplates that the mobile device 100 is not necessarily limited to the configurations shown in FIG 1.

Additionally, the mobile device 100 has an audio speaker port 140 for accommodating the transmission of sound waves from a speaker (not shown) located therebehind. In at least one implementation, the speaker is the same speaker for both regular phone mode and speaker phone mode. In another implementation, the speaker for the speaker phone mode has a separate port. For example, the speaker phone port 140 can be located on the top edge of the device 100 or the rear of the device 100.

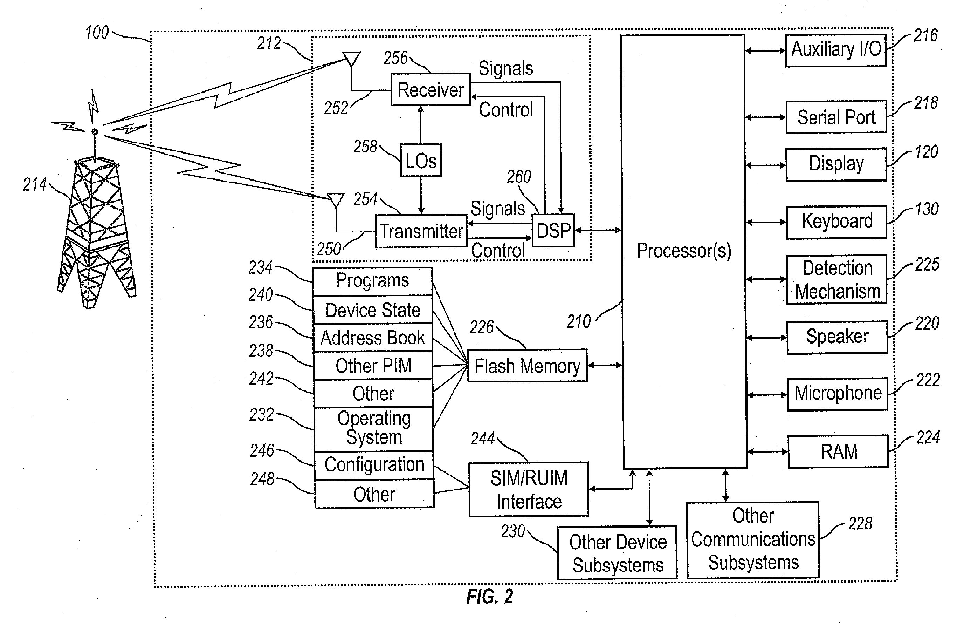

Referring to FIG. 2, an example of a block diagram of some of the components that make up the mobile device 100 is shown. The mobile device 100 can include a processor 210 that can control the operation of the mobile device 100. A communication subsystem 212 can perform all communication transmission and reception with a wireless network 214. The processor 210 can further be coupled to an auxiliary input/output (I/O) subsystem 216, which can be coupled to the mobile device 100. In at least one implementation, the processor 210 can be coupled to a serial port (for example, a Universal Serial Bus port) 218, which can allow for communication with other devices or systems. The display 120 can be coupled to the processor 210 to allow for displaying of information to an operator of the mobile device 100. The keypad 130 (or keyboard) can also be coupled to the processor 210.

The mobile device 100 can include a speaker 220, a microphone 222, random access memory (RAM) 224 and flash memory 226, all of which can be coupled to the processor 210. In at least one implementation the speaker 220 is a dual purpose speaker and functions in both a regular phone mode and a speaker phone mode. In other implementations, a dedicated speaker for the speaker phone mode of operation can be included as well. Other similar components can be provided on the mobile device 100 and optionally coupled to the processor 210. Other communication subsystems 228 and other communication device subsystems 230 are generally indicated as being functionally coupled with the processor 210, as well. An example of a communication subsystem 228 is that of a short range communication system, such as BLUETOOTH® communication module or a WI-FI® communication module (a communication module in compliance with IEEE 802.11 set of protocols) and associated circuits and components.

The processor 210 is able to perform operating system functions and can enable execution of programs on the mobile device 100. In some implementations, not all of the above components may be included in the mobile device 100. For example, in at least one implementation, the keypad 130 is not provided as a separate component and is displayed as required on a dynamic touch display (not shown). In an implementation having a dynamic touch display, the keypad 130 can be displayed as a touchscreen keypad (not shown). A touchscreen module (not shown) can be incorporated in such an implementation such that the touchscreen is in communication with the processor 210. When inputs are received on the touchscreen keypad, the touchscreen module can send or relay messages corresponding to those inputs to the processor 210.

The auxiliary I/O subsystem 216 can take the form of a navigation tool, such as an optical trackpad, a thumbwheel, a mechanical trackball, a joystick, a touch-sensitive interface, or some other I/O interface. Other auxiliary I/O subsystems can include external display devices and externally connected keyboards (not shown). While the above examples have been provided in relation to the auxiliary I/O subsystem 216, other subsystems capable of providing input or receiving output from the mobile device 100 are considered within the scope of this disclosure. Other keys or buttons can be placed along the side of the mobile device 100 to function as escape keys, volume control keys, scrolling keys, power switches, or user programmable keys, and can likewise be programmed accordingly.

Furthermore, the mobile device 100 can be equipped with components to enable operation of various programs, as shown in FIG. 2. In an exemplary implementation, the flash memory 226 can be enabled to provide a storage location for an operating system 232, device programs 234 and data. The operating system 232 can generally be configured to manage other programs 234 that are also stored in flash memory 226 and executable on the processor 210. The operating system 232 can honor requests for services made by programs 234 through predefined program 234 interfaces. More specifically, the operating system 232 can typically determine the order in which multiple programs 234 are executed on the processor 210 and the execution time allotted for each program 234, manage the sharing of flash memory 226 among multiple programs 234, handle input and output to and from other device subsystems 230, and so on. In addition, operators can typically interact directly with the operating system 232 through a user interface, which can include the display 120 and the keypad 130. While in an exemplary implementation, the operating system 232 is stored in flash memory 226, the operating system 232 in other implementations is stored in read-only memory (ROM) or a similar storage element (not shown). As those skilled in the art will appreciate, the operating system 232, the device program 234 or parts thereof can be loaded in RAM 224 or some other volatile memory.

In one exemplary implementation, the flash memory 226 can contain programs 234 for execution on the mobile device 100, including an address book 236, a personal information manager (PIM) 238 and the device state 240. Furthermore, programs 234 and other information 242 including data can be segregated upon storage in the flash memory 226 of the mobile device 100.

When the mobile device 100 is enabled for two-way communication within the wireless communication network 214, the mobile device can send and receive messages from a mobile communication service. Examples of communication systems enabled for two-way communication can include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-TDD), Ultra Mobile Broadband (UMB) networks, Worldwide Interoperability for Microwave Access (WiMAX) networks, Long Tenn Evolution (LTE) networks and other networks that can be used for data and voice, or just data or voice.

For the systems listed above, the mobile device 100 can require a unique identifier to enable the mobile device 100 to transmit and receive messages from the communication network 214. Other systems may not require such identifying information. As an example, GPRS, UMTS, and EDGE use a Subscriber Identity Module (SIM) in order to allow communication with the communication network 214. Likewise, most CDMA systems use a Removable User Identity Module (RUIM) to communicate with the CDMA network. The RUIM and SIM card can be used in multiple different mobile devices 100. The mobile device 100 can be able to operate some features without a SIM/RUIM card. A SIM/RUIM interface 244 located within the mobile device 100 can allow for removal or insertion of a SIM/RUIM card (not shown). The SIM/RUIM card can feature memory and can hold key configurations 246, and other information 248, such as identification and subscriber related information. With a properly enabled mobile device 100, two-way communication between the mobile device 100 and communication network 214 is possible.

The two-way communication enabled mobile device 100 can both transmit and receive information from the communication network 214. The transfer of communication can be from the mobile device 100 or to the mobile device 100. To communicate with the communication network 214, the mobile device 100 in the presently described exemplary implementation is equipped with an integral or internal antenna 250 for transmitting messages to the communication network 214. Likewise, the mobile device 100 in the presently described exemplary implementation can be equipped with another antenna 252 for receiving communication from the communication network 214. These antennae (250, 252), in another exemplary implementation, can be combined into a single antenna (not shown). As one skilled in the art would appreciate, the antenna or antennae (250, 252) in another implementation can be externally mounted on the mobile device 100. The mobile device 100 can also have a transmitter 254 and a receiver 256, which can be respectively coupled to antennae (250, 252), and can also include one or more local oscillators 258 for processing the incoming or outgoing RF signals. The mobile device 100 can also have a digital signal processor (DSP) 260 to assist in the processing of the incoming and outgoing signals.

The mobile device 100 can further include a detection mechanism 225 configured to detect an orientation of the mobile device 100. The detection mechanism 225 is coupled to the processor module, which includes a processor 210, which in turn is coupled to a speaker (for example speaker 220). The detection mechanism 225 generates data that is transmitted to the processor module to determine if the orientation of the mobile device 100 is one that is recognized as being a speaker phone mode operating orientation. The detection mechanism 225 can be configured to detect proximity to an operator. For example, the detection mechanism 225 can detect proximity to an operator's ear. The detection of proximity can be achieved by comparing inductive measurements to predetermined inductive values indicative of a position of the mobile device 100 relative to an operator's ear thereby determining the proximity to an operator's ear. In another example, the detection of proximity can be achieved by comparing measurements of the current orientation of the device 100 to stored or predetermined measurements that are indicative of the device 100 being proximate to the operator's ear The processor 210 can be configured to determine that the mobile device 100 is on a voice call. For example, a voice call on the mobile device 100 can be detected upon receiving a voice dialing command from the operator. The processor 210 can also be configured to determine, based on the measurements received from the detection mechanism 225, whether the mobile device 100 meets a threshold that is indicative of a speaker phone mode operating position. The processor 210 can be further configured to automatically switch the mobile device 100 to a speaker phone mode if the mobile device 100 meets the threshold.

In one arrangement, the detection mechanism 225 can be configured to detect a motion of the mobile device 100 indicating that the mobile device 100 is moving away from the operator's ear. In another arrangement, the detection mechanism 225 can be configured to determine a position or orientation of the mobile device 100. For example, the detection mechanism 225 can detect that the mobile device 100 is in a horizontal orientation, which indicates that the mobile device 100 is away from the operator's ear. In a further arrangement, the detection mechanism 225 can be configured to analyze the operator's voice received by the mobile device 100 through the microphone 222. In another example, the detection mechanism 225 can detect a decrease in amplitude of the operator's voice, indicating that the mobile device 100 is away from the operator's ear. Additionally, a measurement of an acceleration or deceleration of the mobile device 100 can be made thereby indicating the device is not stationary and therefore is being held by the operator. Other conceivable measurements that are not specifically listed here are considered to be within the scope of the present disclosure.

When the mobile device 100 is enabled for voice dialing, the voice call can be initiated by the operator depressing a button on the device to activate the voice dialing. The operator then speaks the desired commands such as "Call Alice." The mobile device 100 has a microphone that is capable of generating data in response to the voice command and sending the data to the processor module. The processor module is capable of interpreting the voice commands and performing the desired command. In this instance, when the "Call Alice" command is given the processor module transmits data to the transmitter to communicate with the wireless network so that the desired number for a contact named Alice can be dialed.

As described herein, the processor module can be further adapted to determine if the voice call is active. For example, the processor module can determine if the call has been placed through the wireless network or can determine the state of dialing the number after having connected with wireless network but prior to having the call answered.

In other implementations, the voice dialing can be activated based upon a detected touch on a touch screen. Additionally, the mobile device 100 can be configured to accept voice commands without an additional input by the operator. For example, the mobile device 100 can be configured to await receipt of specific commands to initiate a calling function such as "Telephone" or other command.

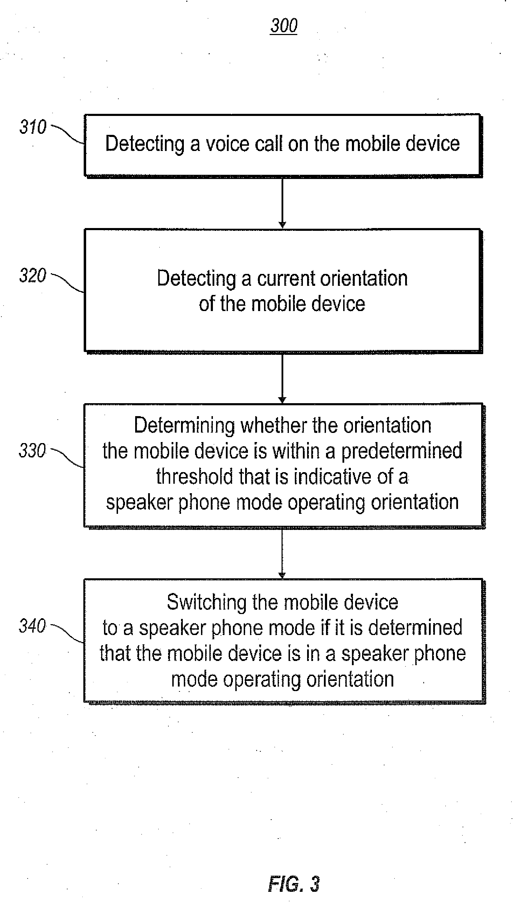

The above arrangements provide a mobile device 100 that operates in a hands-free operation in dependence upon predetermined criteria. One example of such a method is illustrated in FIG 3 described below. The seamless operation in hands-free mode allows the operator to input commands with reduced input to the device and instead relies upon the mobile device 100 to interpret predetermine criteria to determine whether operation should be in a hands-free mode or a regular phone mode.

Referring to FIG. 3, a method 300 for speaker phone mode operation of a mobile device 100 is shown. The present disclosure contemplates that the steps of the method 300 are not limited to the particular order in which the steps are presented here. The method 300 may also include a greater (or even fewer) number of steps than that which is illustrated in FIG. 3. At step 310, a voice call on the mobile device 100 can be detected. For example, a voice call on the mobile device 100 can be detected upon the operator dialing a phone number (for example using voice dialing as described above) or upon receiving a voice dialing command from the operator. At step 320, the mobile device 100 detects a current orientation of the mobile device 100. The detection of the current orientation of the mobile device 100 can be made using one of the detection mechanisms 225 as described above. Specifically, the current orientation of the mobile device 100 can be made in relation to the head of the operator or other body part of the operator. In other examples, the current orientation of the mobile device 100 can be made in relation to verbal commands given by the operator as received by the device 100. In another implementation, the detection mechanism 225 is capable of determining relative motion of the mobile device 100 in relation to the operator.

At step 330, whether the orientation of the mobile device 100 meets a predetermined threshold that is indicative of a speaker phone mode operating orientation is determined. The determination can be made using any of the predetermined thresholds described above. Specifically, the determination of whether the current orientation of the mobile device 100 is within a predetermined threshold that is indicative of a speaker phone mode operating orientation can be made by comparing the measurements or values received by the detection mechanism 225 to a predetermined threshold measurement or value. If the detected measurement at step 320 meets the predetermined threshold measurement, a determination is made that the device 100 is in a speaker phone mode operating orientation.

In another example, where the detection mechanism measures the amplitude of the operator's voice, the determination made in step 330 includes comparing the amplitude measured at step 320 to a predetermined amplitude threshold. If the amplitude measured at step 320 is within the predetermined amplitude threshold, a determination is made that the device 100 in a speaker phone mode operating orientation. In at least one implementation, the predetermined amplitude threshold can be dynamically set. For example, when the device 100 is configured, a predetermined amplitude threshold can be set. The device 100 can then detect measurements of the amplitude of an operator's voice and compare the detected amplitudes with the set predetermined amplitude threshold. Each time a speaker mode operation orientation is detected, the device 100 can store the detected amplitude as the predetermined amplitude threshold for the next time the device is detected to be oriented in a speaker phone operating orientation. Thus, the device 100 dynamically adjusts the predetermined amplitude threshold based on historical measurements taken when the device 100 is known to be in a speaker phone mode operating orientation and in a regular phone mode operating orientation. The predetermined amplitude threshold in at least one implementation is an average of previously detected amplitudes that were recorded during confirmed usages of the mobile device 100 in a speaker phone operation.

In another example, the threshold can be a range of inductive measurements that indicate the mobile device 100 is away from the operator's ear, a value that represents a horizontal orientation of the device 100, or a range of values representing the motion of the device 100 moving away from the operator's ear. One of ordinary skill in the art will also appreciate that the device 100 can measure more than one aspect of the device 100 to determine whether the device 100 is in a speaker phone mode operating orientation, thereby ensuring a more accurate determination. For example, the device 100 can be configured to measure one or more of the orientation, amplitude detected at the microphone,the acceleration of the device, and the relative position of the device 100 to the operator's ear.

At step 340, the mobile device 100 is automatically switched to a speaker phone mode if a determination is made that the orientation of the mobile device 100 meets the threshold. The device 100 can be switched to a speaker phone mode based on the detection mechanisms 225 and predetermined thresholds described above. Specifically, the device 100 can be automatically switched to a speaker phone mode when the current detected orientation of the device 100 meets or falls within the predetermined threshold measurement or value. For example, if the predetermined threshold is a range of amplitude measurements indicative of the device 100 being away from the operator's ear and if the current detected orientation meets or falls within the predetermined range of amplitude measurements, the device 100 will automatically switch to a speaker phone mode. In another example, if the predetermined threshold measurement is a value indicative of the device being horizontally oriented, and the detected current orientation matches the predetermined threshold value, the device 100 will automatically switch to a speaker phone mode. In one implementation, switching the device 100 to a speaker phone mode can include transmitting sound waves from the device without having the operator hold the device 100 proximate to the operator's face. For example, the device 100 can be switched to transmit sound waves from the speaker-phone-mode speaker port instead of from the regular-phone-mode speaker port. In another implementation where the speaker 220 is the same in the speaker phone mode and the regular phone mode, switching the device 100 to a speaker phone mode can include increasing the volume of the speaker 220 to a speaker phone mode volume. In yet another implementation, switching the device 100 to a speaker phone mode can include transmitting sound waves from the speaker phone mode speaker port instead of from a headset. Thus, when the a determination is made that the device 100 is in a speaker phone mode operating orientation, the device 100 is switched to the speaker phone mode without having the operator physically interact with the device 100.

Portions of the mobile device 100 and supporting components can take the form of hardware elements, software elements or elements containing both hardware and software. In one implementation, the software portions can include, but are not limited to, firmware, resident software, microcode, etc. Furthermore, these software portions can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current example of optical disks include compact disk-read only memory (CD-ROM), compact disk-read/write (CD-R/W) and DVD. Both processors and program code for implementing each as aspect of the system can be centralized or distributed (or a combination thereof) as known to those skilled in the art.

A data processing system suitable for storing program code and for executing program code, which can be implemented in any of the above-referenced devices described herein, can include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. I/O devices (including but not limited to keyboards, displays, pointing devices, etc.) can be coupled to the system either directly or through intervening I/O controllers.

Examples have been described above regarding a system and method of speaker mode operation of a mobile device. The system and method described herein provides for speaker phone mode operation of a mobile device that does not require additional interaction during a phone call. In one implementation, the mobile device includes a detection mechanism configured to determine the orientation of the mobile device. In an exemplary implementation, as the method and system disclosed automatically switches the device to a speaker phone mode or a hands-free mode depending on predetermined criteria (such as the orientation of the device or the proximity of the device to an operator's ear), an operator can initiate and complete a hands-free call made by voice dialing without having to enter additional physical inputs to confirm that a the operator would like to carry a voice call. For example, if the operator is driving in an automobile and initiates a call using voice dialing, the system and method described herein can detect that the device is in a speaker phone mode operation and automatically place the device in a speaker phone mode. Therefore, the operator does not have to physically interact and look at the device to confirm a desire to operate the device in speaker phone mode, and continue to safely drive the automobile without the distractions of having to physically interact with the device.

In another implementation, the system and method of speaker mode operation, can automatically switch between a next-to the-ear operation, a hands-free mode operation, and a speaker phone mode operation depending on the predetermined criteria described herein. Thus, the system and method disclosed herein allows for seamless operation of the device between hands-free operation and physical operation that requires minimal physical interaction by the operator.

Various modifications to and departures from the disclosed implementations will occur to those having skill in the art. The subject matter that is intended to be within the spirit of this disclosure is set forth in the following claims.

## Claims

1. A mobile device (100) configured for hands-free operation, the mobile device (100) comprising:
a detection mechanism (225) configured to detect an orientation of the mobile device (100);
a microphone (222);
a speaker (140) that generates audio sound when the mobile device (100) is in a speaker phone mode; and
a processor module (210) coupled to the detection mechanism (225) and the speaker (222), wherein the processor module (210) is adapted to:
initiate a voice call using a voice dialing mode, wherein the mobile device (100) dials a telephone number based on commands received through the microphone (222);
determine an active voice call status when the voice call is active;
detect a current orientation of the mobile device (100) received from the detection mechanism (225);
determine whether the detected current orientation is within a predetermined threshold that is indicative of a speaker phone mode operating orientation; and
switch the mobile device (100) to a speaker phone mode, when the detected current orientation indicates the speaker phone mode operating orientation.

2. The mobile device (100) as recited in claim 1, wherein the detection mechanism (225) is configured to detect proximity to an operator.

3. The mobile device as recited in any one of the preceding claims, wherein the detection mechanism (225) is configured to detect motion of the device (100) relative to the operator's ear.

4. The mobile device (100) as recited in claim 3, wherein the switching to the speaker phone mode is dependent upon the motion of the mobile device (100) away from the operator's ear.

5. The mobile device (100) as recited in claim 4, wherein the detection mechanism (225) detects a decrease in amplitude of the operator's voice indicating that the mobile device (100) is away from the operator's ear.

6. The mobile device (100) as recited in any one of the preceding claims, wherein the detection mechanism (225) is configured to detect orientation of a front face of the mobile device (100) in relation to a gravitational force.

7. The mobile device (100) as recited in claim 6, wherein the switching to the speaker phone mode is dependent upon the determination of a horizontal orientation of the front face of the mobile device (100).

8. The mobile device (100) as recited in any one of the preceding claims, wherein the detection mechanism (225) is configured to analyze the operator's voice received by the microphone (222).

9. A mobile communication device (100) comprising:
a processor (210);
an orientation detection assembly (225):
in communication with the processor (210), and
operative to detect a current orientation of the communication device (100); and
a computer-readable medium:
in communication with the processor (210), and
comprising instructions, that when executed by the processor (210), are operative to configure the mobile communication device (100) to a speaker phone mode when the detected orientation is within a predetermined threshold and a voice call has been placed.

10. The mobile communication device (100) as recited in claim 9, wherein detecting the current orientation includes detecting orientation of a front face of the mobile device (100) in relation to a gravitational force.

11. A method for speaker phone mode operation of a mobile device (100), comprising:
detecting a voice call (310) on the mobile device;
detecting a current orientation (320) of the mobile device;
determining whether the current orientation is within a predetermined threshold that is indicative of a speaker phone mode operating orientation (330); and
switching the mobile device to a speaker phone mode (340) if a determination is made that the mobile device is in a speaker phone mode operating orientation.

12. The method as recited in claim 11, wherein detecting the current orientation (320) includes detecting proximity to an operator.

13. The method as recited in any one of claims 11-12, wherein detecting the current orientation (320) includes detecting orientation of a front face of the mobile device (100) in relation to a gravitational force.

14. The method as recited in claim 11-13, wherein the switching to the speaker phone mode (340) is dependent upon the determination of a horizontal orientation of the front face of the mobile device (100).

15. The method as recited in any one of claims 11-14, wherein detecting the current orientation (320) includes analyzing the operator's voice received by a microphone (222).

## Amended claims

### Amended claims in accordance with Rule 137(2) EPC.

**1.** A mobile device (100) configured for hands-free operation, the mobile device (100) comprising:
a detection mechanism (225) configured to detect an orientation of the mobile device (100);
a microphone (222);
a speaker (140) adapted to generate audio sound when the mobile device (100) is in a speaker phone mode; and
a processor module (210) coupled to the detection mechanism (225) and the speaker (222), wherein the processor module (210) is adapted to:
initiate a voice call using a voice dialing mode, wherein the mobile device (100) is arranged to dial a telephone number based on commands received through the microphone (222);
determine an active voice call status when the voice call is active;
detect a current orientation of the mobile device (100) received from the detection mechanism (225);
determine whether the detected current orientation is within a predetermined threshold that is indicative of a speaker phone mode operating orientation; and
switch the mobile device (100) to a speaker phone mode, when the detected current orientation indicates the speaker phone mode operating orientation.

**2.** The mobile device (100) as recited in claim 1, wherein the detection mechanism (225) is configured to detect proximity to an operator.

**3.** The mobile device as recited in any one of the preceding claims, wherein the detection mechanism (225) is configured to detect motion of the device (100) relative to the operator's ear.

**4.** The mobile device (100) as recited in claim 3, wherein the switching to the speaker phone mode is dependent upon the motion of the mobile device (100) away from the operator's ear.

**5.** The mobile device (100) as recited in claim 4, wherein the detection mechanism (225) is arranged to detect a decrease in amplitude of the operator's voice indicating that the mobile device (100) is away from the operator's ear.

**6.** The mobile device (100) as recited in any one of the preceding claims, wherein the detection mechanism (225) is configured to detect orientation of a front face of the mobile device (100) in relation to a gravitational force.

**7.** The mobile device (100) as recited in claim 1, wherein the switching to the speaker phone mode is dependent upon the determination of a horizontal orientation of the mobile device (100).

**8.** The mobile device (100) as recited in any one of the preceding claims, wherein the detection mechanism (225) is configured to analyze the operator's voice received by the microphone (222).

**9.** A method for speaker phone mode operation of a mobile device (100), comprising the steps of:
detecting a voice call (310) initiated by voice dialing on the mobile device;
detecting a current orientation (320) of the mobile device;
determining whether the current orientation is within a predetermined threshold that is indicative of a speaker phone mode operating orientation (330); and
switching the mobile device to a speaker phone mode (340) if a determination is made that the mobile device is in a speaker phone mode operating orientation.

**10.** The method as recited in claim 9, wherein the step of detecting the current orientation (320) includes detecting proximity to an operator.

**11.** The method as recited in any one of claims 9-10, wherein the step of detecting the current orientation (320) includes detecting orientation of a front face of the mobile device (100) in relation to a gravitational force.

**12.** The method as recited in claim 9-11, wherein the step of switching to the speaker phone mode (340) is dependent upon the determination of a horizontal orientation face of the mobile device (100).

**13.** The method as recited in any one of claims 9-13, wherein the step of detecting the current orientation (320) includes analyzing the operator's voice received by a microphone (222).
